Europäisches Patentamt

European Patent Office

Office européen des brevets

(11) Publication number: **0 340 507**

**A2**

## (12) EUROPEAN PATENT APPLICATION

(21) Application number: **89106683.9**

(22) Date of filing: **14.04.89**

(51) Int. Cl.⁴: **B60R 25/10**

(30) Priority: **05.05.88 IT 8363488**
**03.04.89 IT 6090889 U**

(43) Date of publication of application:
**08.11.89 Bulletin 89/45**

(84) Designated Contracting States:
**AT BE CH DE ES FR GB GR IT LI LU NL SE**

(71) Applicant: **DELTA ELETTRONICA s.p.a.**
**Via Astico 41**
**I-21100 Varese (VA)(IT)**

(72) Inventor: **Memmola, Serafino**
**Via Matteotti, 40**
**I-21020 Casciago (VA)(IT)**

(54) **Antitheft warning apparatus for vehicles.**

(57) Antitheft warning apparatus for vehicles comprehending at least an operating central module MCF and a motion module MAS equipped with an electrolytic transducer, with a central electrode and two or more peripherical ones placed simmetrically respect to the central, and by an electronic circuit equipped with a rectifying and amplifying section SDA, a slope making section SFR and a comparing section SCO, being the peripherical electrodes supplied continuously by module MCF and being the output signal from the central electrode worked in section SDA, compared in section SCO with the output signal of section SFR, also operated by MCF, so that module MCF measures the time elapsed from the beginning of the slope to the moment in which said slope reaches the value of the output signal of the central electrode and compares it with the initial value of said time evaluated by module MCF in correspondence of the initial attitude of the vehicle, and can establish then if a change of attitude of the vehicle and therefore a warning state has occurred and operate therefore the warning, being the module MAS equipped with a container, which allow the operator to adjust the direction of the transducer so as at the beginning the electrolyte surface is orizontal and the peripherical electrodes directed according a wanted direction in relation to the type of vehicle.

FIG.9

FIG.3

1a

## ANTITHEFT WARNING APPARATUS FOR VEHICLES

This invention refers to an antitheft warning apparatus for vehicle, and more precisely to an antitheft warning apparatus for vehicles equipped with a level reference module, called also motion module.

Til now there exist many kinds of antitheft warning apparatus IAF for vehicles, the most part of which comprehends a motion module MAS, and that is a sensor of attitude with the relating electronic circuit, able to signal the changes of attitude of the vehicle, which occur or for the removing of the wheels or for other unauthorized operations as for istance the thefts with lifting of the vehicle, which evidently can not occur without changes of attitude of the vehicle.

All the attitude sensors, til now employed in the motion modules of the antitheft warning apparatus, as the piezoelectrical type, the type with mercury bulb switch and other types proved to be not very much reliable, sensitive to the vibrations and unlikely shakeproof, and moreover unlikely controllable by the relating electronic circuits, which work the output signals of said sensors. On the other hand there exist already electrolitic transducers, able that is to signal changes of gravity and attitude of a body, but til now they have been employed only in fields of the art completely different as in the highly sophisticated precision devices, as for instance the air and submarine navigation systems.

Aim of the apparatus in conformity with this invention is that of realizing an antitheft warning apparatus for vehicles equipped with a motion module of high reliability and high sensitivity.

The antitheft warning apparatus for vehicle, in conformity with this invention comprehends at least an operating central module MCF with microprocessor MP and a motion module MAS, comprehending the motion module a sensor constituted by an electrolytic transducer, made up by a glass bulb partially filled with an electrolyte and containing at least three electrodes, of which the peripherical input ones are placed simmetrically respect to the central one, and supplied continuously by MP with a current with square wave equal and shifted out of phase each to other in relation to the number and the position of the peripherical electrodes and therefore shifted 180 degrees if the electrode are two, and such an electronic circuit, that is comprehending such components and connected each to other, to the output central electrode of the transducer and to the circuits of the operating central module MCF in such a way and the MP is programmed in such a way that the motion module MAS and the operating central module MCF are suitable to detect also very little changes of attitude, also of a twentieth of degree with very high reliability, and to cause then the alarm warning.

In a second preferred solution the transducer has five electrodes, the output central one and four peripheral input ones shifted 90 degrees each to other and supplied by a square wave current shifted 90 degree out of phase each to other so as to detect better changes of attitude in any directions.

In a third solution the motion module MAS comprehends such a rectifying and amplying section of the output signal of the electrolytic transducer, such a comparing section and such a slope making section (with such wording we mean a section which produces a signal the voltage of which increases linearly according a slope) and the microprocessor is programmed in such a way that upon arming of the antitheft warning apparatus IAF the MP supplies to the slope making section an input state "start", which causes an output slope, the value of which is compared in the comparing section with that of the signal coming from the central electrode of the transducer, and worked in the rectifying and amplifying section, so as when the slope reaches the value of said signal the comparing section sends to the MP a signal, upon receiving of which the MP ceases the start signal to the slope making section and performs the count of the clock units of the cycle and that is of the time elapsed from the emitting of the start signal and the detecting of the output signal of the comparator, and memorizes said value as the initial value corresponding to the initial attitude of the vehicle and that is to the attitude that the vehicle has upon arming of the antitheft warning apparatus IAF, and then at the end of the count emits newly a start signal in order to cause newly the start of the operating of the cycle of the operating central module, that is the slope making, the comparing it with the signal coming from the transducer and upon the coincidence of their values the emitting of a signal to the MP, who provides newly to perform the count of the clock units relating to the new cycle and to comparate it with the initial memorized value, and in case that the difference respect to said initial value exceedes a predetermined number of clock units to deem said value as indicative of change of attitude of the vehicle and therefore to emit a signal of operating of the control circuit of the warning device, in fact in case of change of attitude of the vehicle owing to the consequent movement of the electrolyte relative to the electrodes, the output signal of the central electrode changes and therefore the slope takes a minor or greater time, in function of the direction of the tilt of the vehicle, for reaching the value of said signal, and then for causing the emitting of the output signal of the comparing section and the sending of it to the MP, repeating itself continuously, after memorizing of the initial value said cycle until a situation of warning occurs.

In an fourth solution, improvement of the third one, the MP is programmed in such a way that it memorizes as initial value of reference the average of a predetermined numbers of counts of the time taken by the slope for reaching the value of the worked signal coming from the transducer, and that is from the emitting of the start signal to the receiving by MP of the output signal of the comparing section.

In a fifth solution the MP is equipped with a series of two or more microswitches and connected to the sames and programmed in such a way that with closing one or more of said switches, it is able to establish the sensitivity of the apparatus and that is the number of clock units, of which the count of the time of the cycle has to exceed that memorized as initial, so that the MP considers said cycle as a warning cycle and then it controls the warning device.

In a sixth solution the MP is equipped with a series of such microswitches and connected in such a way to the sames and programmed in such a way that closing one or more of said switches it is able to define the number of consecutive counts of warning cycles, after which it controls the warning device.

In a seventh solution the motion module MAS comprehends a circuit of double supply and that is with two values of voltage, equal and of opposite sign, and with the ground at the intermediate value in order to allow the module MAS to have the maximum sensitivity for changes of attitude of the vehicle in all directions.

In a eighth solution the MP is programmed in such a way that it is able to reset itself automatically for changes of temperatures or the likes, that is modifying the value of the count memorized as initial only for very little changes that is changes of one unit of clock from a count to the following one, that is for changes which can not correspond to changes of attitude of the vehicle.

In a ninth solution the motion module comprehends a container constituted by a hollow spherical member, with flat poles or not, composed by two caps fixable each to other, by a structure of base of said spherical member and by a ring for fixing in an adjustable way the spherical member to said base, being the spherical member suitable to receive in its interior and to hold fixed to itself the base of the electronic circuit, on which in addition to the printed circuit and to the components of the circuit is fixed also the electrolytic transducer, being the base structure shaped in such a way to be fixable to the fixed structure of the vehicle, and to be equipped with bearing elements for the spherical member according to a ring with internal surface sloping or spherical delimited by two circumferences with diameters less than the maximum one of the spherical member, and by elements for collaboration, generally a threading, with the fixing ring, being this ring at its turn equipped with such corresponding elements for collaboration with the spherical member and that is shaped in such a way to be suitable for being inserted on the spherical member after having leaned said member on the special elements of the base, and joined to the base, and that is screwed to this base in the case of connection by threading, until the special elements of the ring go in collaboration contact with the surface of the spherical member according to a ring with sloping or spherical internal surface delimited by circumferences with diameters less than the maximum diameter of the spherical member and by the opposite part respect to said maximum diameter of the surface of contact with the special elements of the base, so as to bind said spherical member to the base and to fix it completely to said base, when the ring is tightened or in any case blocked to the base, and on the contrary, before fixing it, to hold it only bound to itself allowing the rotation around any axis with light friction when the ring is only partially screwed or in any case partially fixed to the base, in such a way that after the mounting consisting in fixing the base to the fixed structure of the vehicle, inserting the spherical member in its base, after having mounted in its interior the electronic circuit with electrolytic transducer, and partially fixing of the ring to the base for holding the spherical member, one can rotate said spherical member, - for placing the base of the electronic circuit in orizontal position in order to obtain that at the beginning the surface of the electrolyte is perpendicular to the electrodes and therefore the electrolytic transducer has the maximum capacity of detecting changes of attitude in any directions, - and for adjusting the direction of the base of the transducer and as consequence of its external electrodes respect to the transversal and longitudinal axis of the vehicle according to a wonted direction, in that the sensitivity of the transducer changes in relation to the direction according to which the transducer and therefore its external electrodes are fixed to the fixed strutture of the vehicle, and considering that the changes of attitude unlikely occur for rotation around an axis parallel only to the transversal axis or to the longitudinal axis of the vehicle but ever around an axis with an intermediate direction, one can with fixing the direction of the transducer, upon mounting it on the vehicle, determine the directions of maximum sensitivity of the module itself in relation to the type of the vehicle.

In a tenth solution similar to the previous one the upper cap of the spherical member is equipped with a hollow suitable to receive and fix a level, generally a water level, suitable to allow a easy and rapid direction adjustment of the spherical member so as to place the base of the electronic circuit and then the electrolytic transducer in orizontal position, being moreover the upper cap equipped with signs through grooves, reliefs or other means, of two arcs of the maximum circle perpendicular each to other and going through the center of the level, and placed in a predetermined way respect to the positions of the external electrodes, being said signs such to allow an easy and rapid direction adjustment of the spherical member and as consequence of the base of the transducer and of the position of the external electrodes respect to the transversal and longitudinal axis of the vehicle according to a wonted direction in relation to those of maximum sensitivity of the module.

In an eleventh solution, similar to the fifth, sixth, ninth and tenth solutions the spherical member is equipped with a hole of shape, dimensions and position suitable to allow to reach the microswitches of adjustment of the sensitivity of the module in order to permit to connect or disconnect in any moment after mounting, direction adjusting and fixing of the motion module to the fixed structure of the vehicle, being moreover the spherical member equipped with a plug suitable to close said hole to make tight the spherical member for protecting its contents, and in any case for allowing its reopening and closing when necessary for a further adjustment of the microswitches.

For better clarifying the apparatus in conformity with this invention an embodiment is described, only as example, referring to the enclosed drawings, in which:

- figure 1 is a block diagram;

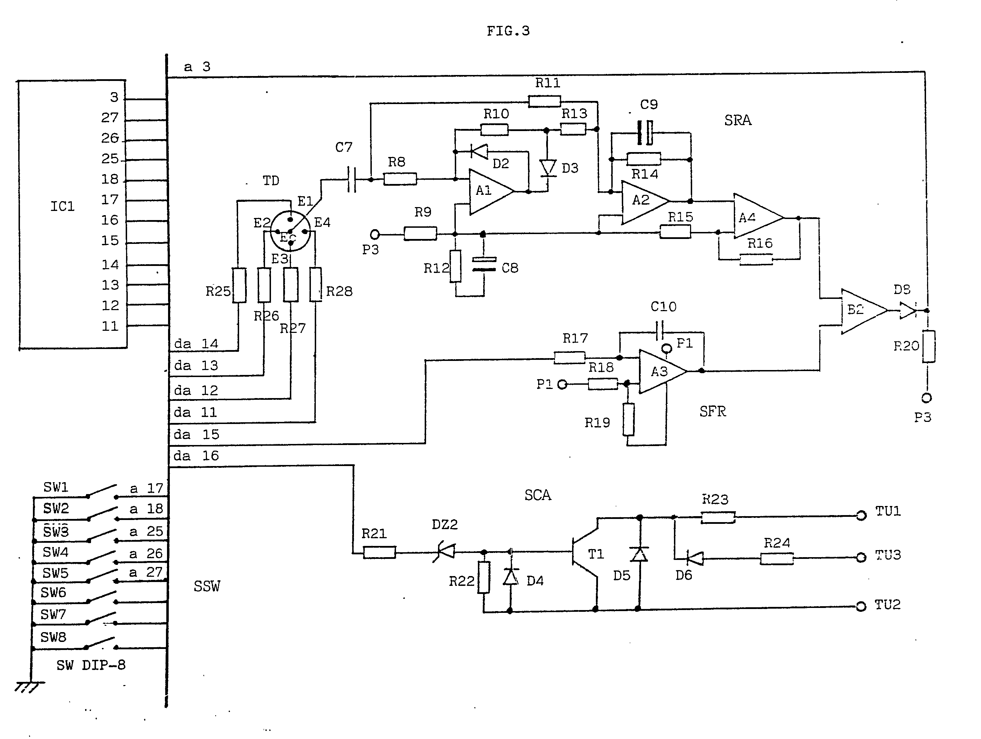

- figures 2 and 3 are electronic diagrams.
- figures 4, 5, 6 are elevation views, respectively a side-view, a front-view and a back-view,
- figures 7 and 8 are plan view, respectively upward and downward,

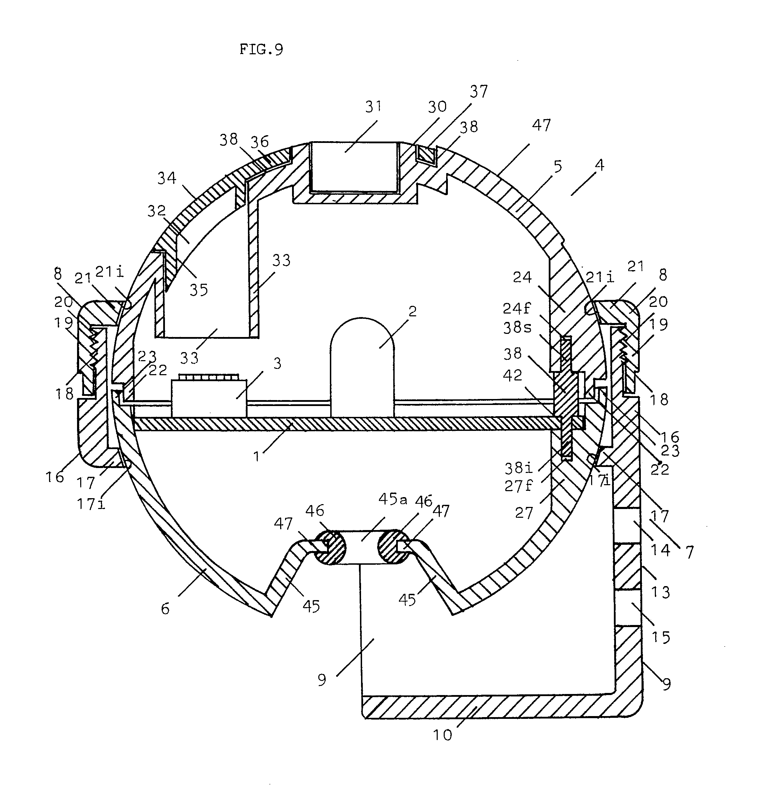

- figure 9 is a cross vertical view A-A of fig.5.

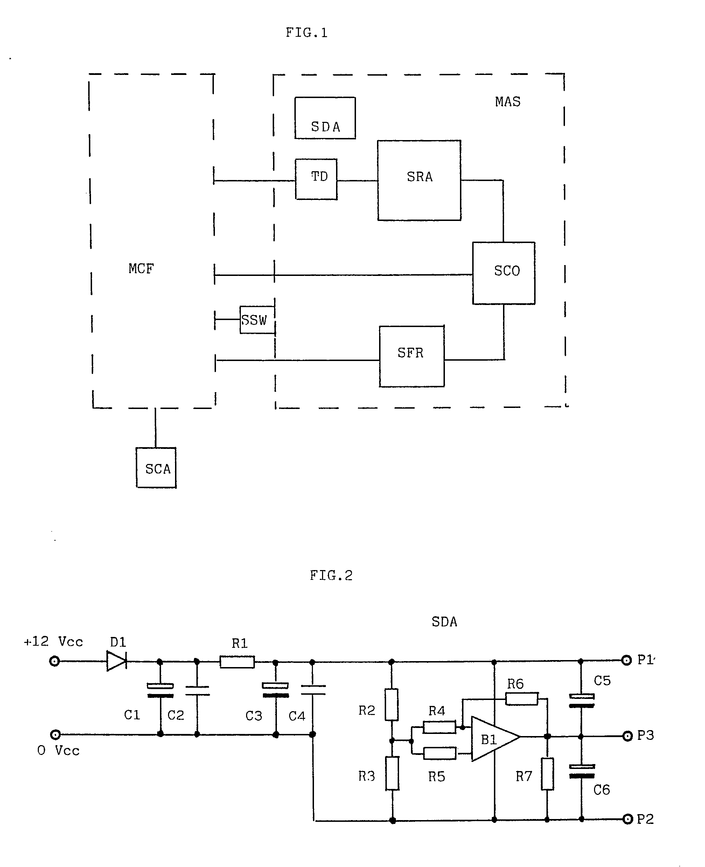

Of the antitheft apparatus of the example there are indicated in the block diagram of figure 1 the operating central module MCF, which includes among other components the microprocessor MP, constituted by IC1, integrated circuit COP820 of National Semiconductor, the section of microswitches SSW, the module MAS, which includes the section of double supply SDA, the electrolytic transducer TD, the rectifying and amplifying section SRA, the slope making section SFR and the comparing section SCO, and finally the warning controlling section SCA controlled by the MP of the module MCF.

For keyboard reasons the microFarad is indicated with the reference symbol "mF" and the ohm with "σ".

The supply section SDA is connected with its terminals to the poles of the battery at + 12 Vcc and 0 and is equipped with the diode D1 (IN4002) and the filters constituted by the electrolytic capacitors C1 (47mF) and C3 (10 mF), by the capacitors C2 (0,1 mF) and C4 (0,1 mF), by the resistor R1 (47 o), by the Zener diode DZ1 (15 V), by the resistors R2, R3, R4, R5, R6 (all of 100 Ko), by the amplifier B1 belonging to the integrated circuit IC2, constituted by a Low Power Dual Operational Amplifier LM358 of the National Semiconductor, by R7 (10 Ko) and by the electrolytic capacitors C5 and C6 (both of 1 mF) being therefore the output terminals P1 and P2 respectively at the voltage of + 5 Vcc and - 5 Vcc, while the intermediate point P3 constitutes the ground of the module MAS.

The transducer is constituted by an electrolytic transducer Proportioning Non-linear/Dual Axis Transducer Series 0717 of the Fredericks USA.

It is equipped with an output central electrode Ec, which is connected to the capacitor C7 (0,22 mF) of input of the rectifying and amplifying section, and with four peripheral electrodes shifted 90 degrees each to other and each supplied by IC1 with a square wave current shifted 90 degree out of phase each to other, respectively the electrode E1 from pin 14 through R25 (820 o), E2 from pin 13 through R26 (820 o), E3 from pin 12 through R27 (820 o) and E4 from pin 11 through R28 (820 o).

The rectifying and amplifying section SRA has three subsections, of which the two subsections appointed respectively to the rectifying of the two half-waves of the output signal of the central electrode of the transducer, include each one amplifier respectively A1 and A2 belonging to the integrated circuit IC3 constituted by a Low Power Quad Operational Amplifier LM 324 of the National Semiconductor, equipped with the resistors R8 (100 Ko), R9 (82 Ko), R10 (100 Ko), R11 (100 Ko), R12 (47Ko), R13 (50 Ko) and R14 (100 Ko), with the diodes D2 and D3 (IN4148), with the elecrtolytic capacitors C8 (1 mF) and C9 (10 mF) and the resistor R15 (10 Ko), while the amplifying subsection of the rectified signal comprehends the amplifier A4 of IC3, with the resistor R16 (470 Ko).

The slope making section SFR comprehends the resistors R17 (100 Ko), R18 (39 Ko), R19 (560 o), the amplifier A3 of IC3 and the capacitor C10 (68 KpF), while the comparing section SCO comprehends the amplifier B2 of IC2, the diode D8 (IN4148) and the resistor R20 (10 Ko).

The warning control section SCA connected to the pin 16 of IC1 comprehends the resistor R21 (10 Ko), the Zener diode DZ2 (8,2 V), R22 (10 Ko), the diode D4 (IN4148), the transistor T1 (2222), the diode of protection D5 (IN4148) and the diode D6 (IN4148), the resistor R23 (10 Ko) and R24 (10 Ko), and has the terminals TU1 and TU2 respectively at +12 vcc and to the ground (0V), while the operative terminal TU3 is connected to the warning device in order to operate it when it is grounded by the positive control signal from pin 16 of IC1 through the transistor T1.

The section SSW of the operating central module MCF comprehends a series of 8 switches SW DIP-8, connected to ground and respectively SW1 to pin 17, SW2 to pin 18, SW3 to pin 25, SW4 to pin 26, and SW5 to pin 27 of IC1, while SW6, SW7 and SW8 are not utilized.

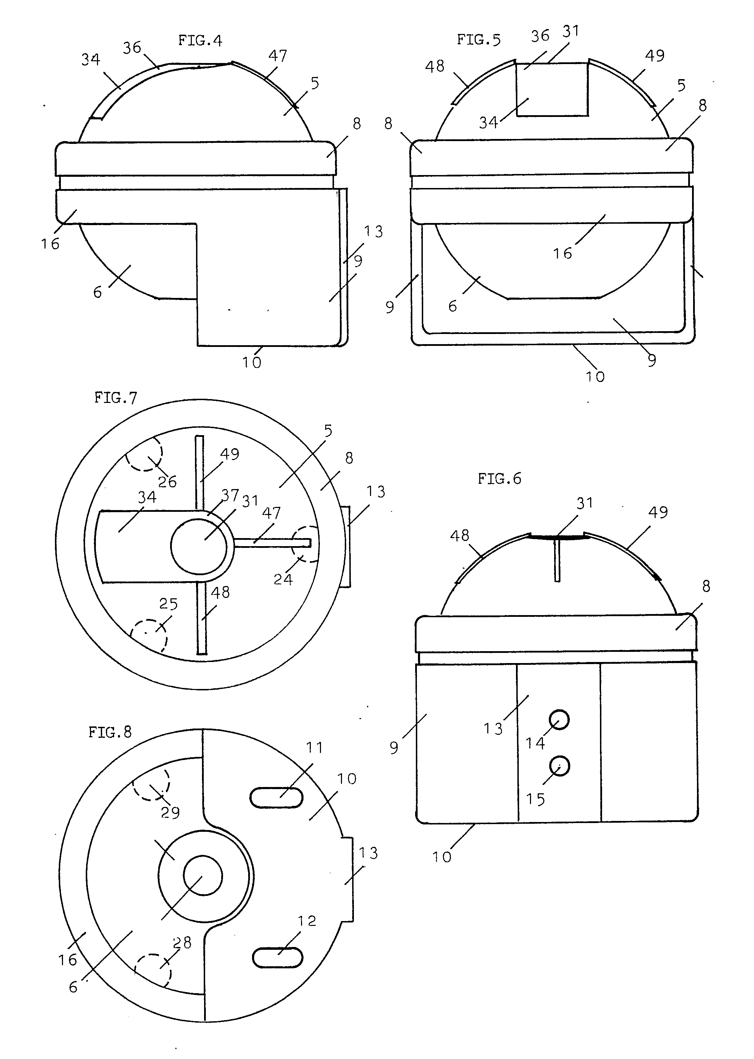

As results from figure 6 on the base 1 of the electronic circuit of the motion module MAS are mounted both the transducer 2 and section SSW of microswitches 3, moreover said module comprehends a container constituted by a hollow spherical member 4, composed by two caps, the upper cap 5 and the lower cap 6, by a base structure 7 and by a fixing ring 8 for fixing member 4 to the base structure 7. Said structure is constituted by a semicylindrical shell 9 with base 10 equipped with a pair of oblong through holes 11 and 12, while the shell is equipped in the back with a projection 13 with a pair of through holes 14 and 15, suitable for fixing the module with screws to a subvertical element of the fixed structure of the vehicle, while the holes 11 and 12 are suitable for fixing it to an suborizontal element of said structure.

The base structure 7 is equipped in the upper part with a ring 16, fixed to the semicylindric shell 19, being said ring equipped in its interior with an anular projection 17 delimited inside by a spherical surface 17i suitable to adhere to the spherical member and to act as its bearing according to a circular ring with diameters less than the maximum diameter of said member, and outside in the upper part with a threading 18.

The fixing ring 8 is constituted by a cylindrical part 19, inside equipped with a threading 20, suitable to be screwed to that 18 of the base, and with an anular projection 21 with internal spherical surface 21i suitable to adhere to the spherical member and delimited to two circumferences with diameters less than that maximum of the spherical member, therefore after having leaned the spherical member on the special anular element 17 of the base the operator inserts from above the ring 8 on the spherical member and he screws it to the base until the elements 21 adhere to the external surface of the spherical member 4.

The two caps of the spherical member have on their rim a step respectively 22,23, which collaborate each to other for the junction of the two caps, moreover both caps are equipped inside with three vertical peripherical projections, respectively 24,25,26 the upper cap, and 27,28,29 the lower cap, each projection is equipped at its turn with a vertical cylindrical hole 24f,25f,26f and 27f,28f,29f, being said projections placed to the vertexes of an equilateral triangle inscribed in the base of said caps. The upper cap is moreover equipped with a polar cylindrical hole 30, suitable to fit and fix a water level 31, moreover at a side of said hole it is equipped with a slot 32, having its rim an inner extension 33 with cylindrical shape with square cross section, suitable to allow after the mounting and fixing of the module on the vehicle to reach the two series of microswitches 3 for adjusting the duration of the valid signals and their numbers for controlling the starting of the warning alarm.

The upper cap 5 is equipped moreover with a rubber plug 34 with such a shape to allow to close said hole, and equipped with extension 35 insidewards of the cap for better fixing it to the cap and with another extension 36 with anular rim 37, suitable to fit itself in the groove 38 which sorrounds the external surface of the cylindrical level.

Before joining each to other the two caps of the spherical member it is mounted the base of the electronic circuit, with all its components and with the electrolytic transducer, in the lower cap through the three rubber elements 39,40,41 (only the first one in indicated in figure 6), which are cylindrical with three diameters, and the lower projections of which (39i,40i,41i) are forced into the through hole 42,43,44 machined in the base 1 and then into the holes 27b,28b,29b of the projections 27,28,29 of the lower cap. The lower cap is equipped at its pole with a frusto-conical recess 45 with hole 45a, equipped with a rubber gasket 46 astride the upper circular rim 47 of said frusto-cone for the tight passage of the conductor (non indicated in the figure), comprehending the connections of the motion module MAS and of the section SSW of microswitches 3 to the central operating module MCF of the antitheft apparatus IAF and to the supply. Then after having fixed base 1 in the lower cap 6 to this cap is applied the upper cap 5 so as the upper projections 39s,40s,41s of the rubber elements 39,40,41 above the central part with greater diameter (39c,40c,41c), which acts as spacer between the base 1 and the projections 24,25,26 of the upper cap, fit themselves in the holes 24f, 25f, 26f of said projections of the upper cap 5 until the two caps close each to other for forming a spherical body.

The upper cap 5 is moreover equipped with three external reliefs 48, 49, 50 placed perpendicularly each to other according three meridians of the spherical member.

After having mounted said spherical member 4 on the base structure 7, threaded the fixing ring 8 on said member and screwed it on the base ring 16, before completing its screwing the operator performs the adjustment of the direction of the spherical member, for placing orizontal the base 1, on which is fixed with electrolytic transducer 2, and then vertical its electrodes, what is made by means of the water level 31, then the operator rotates the spherical member around its vertical axis so as to adjust the direction of the transducer and that is of its external electrodes in such a way that the module has such a direction to have the maximum sensitivity for inclinations in the wonted direction according to the type of the car.

This adjustment is made easy to the presence of the three perpendicular reliefs 48,49,50, existing on the external surface of the upper cap 5.

After the performance of said adjustments ring 8 is tightened and member 5 remains so definitively blocked to the base structure of the module.

## Claims

1. Antitheft warning apparatus for vehicles comprehending at least an operating central module MCF with microprocessor MP and a motion module MAS, characterized in that the motion module comprehends a sensor constituted by an electrolytic transducer, made up by a glass bulb partially filled with an electrolyte and containing at least three electrodes, of which the peripherical input ones are placed simmetrically respect to the central one, and supplied continuously by the MP with a current with square wave equal and shifted out of phase each to other in relation to the number and the position of the peripherical electrodes and therefore shifted 180 degrees if the electrode are two, and such an electronic circuit that is comprehending such components and connected each to other, to the output central electrode of the transducer and to the circuits of the operating central module MCF in such a way and the MP is programmed in such a way that the motion module MAS and the operating central module MCF are suitable to detect also very little changes of attitude, also of a twentieth of degree with very high reliability, and to cause then the warning.

2. Apparatus as claimed in claim 1, characterized in that the transducer has five electrodes, the output central one and four peripherical input ones shifted 90 degrees each to other and supplied by a square wave current shifted 90 degree out of phase each to other so as to detect better changes of attitude in any directions.

3. Apparatus as claimed in claims 1 and 2 characterized in that the motion module MAS comprehends such a rectifying and amplying section SRA of the output signal of the electrolytic transducer, such a comparing section SCO and such a slope making section SFR and the microprocessor is programmed in such a way that upon arming of the antitheft warning apparatus IAF the MP supplies to the slope making section SFR an input state "start", which causes an output slope, the value of which is compared in the comparing section SCO with that of the signal coming from the central electrode Ec of the transducer and worked in the rectifying and amplifying section SRA so as when the slope reaches the value of said signal the comparing section SCO sends to MP a signal, upon receiving of which the MP ceases the start signal to slope making section SFR and performs the count of the clock units of the cyle and that is of the time elapsed from the emitting of the start signal and the detecting of the output signal of the comparator SCO, and memorizes said value as the initial value corresponding to the initial attitude of the vehicle and that is to the attitude that the vehicle has upon arming of the antitheft warning apparatus IAF, and then at the end of the count emits newly a start signal in order to cause newly the start of the operating of the cycle of the operating central module MCF, that is the slope making, the comparing it with the signal coming from the transducer and upon the coincidence of their values, the emitting of a signal to the MP, who provides newly to perform the count of the clock units relating to the new cycle and to compare it with the initial memorized value, and in case that the difference with said value exceedes a predeterminated number of clock units to deem said value as indicative of change of attitude of the vehicle and therefore to emit a signal of operating of the control circuit of the warning device, in fact in case of change of attitude of the vehicle owing to the consequent movement of the electrolyte relative to the electrodes the output signal of the central electrode changes and therefore the slope takes a minor or greater time in function of the direction of the tilt of the vehicle, for reaching the value of said signal, and then for causing the emitting of the output signal of the comparing section and the sending of it to the MP, repeating itself continuously, after memorizing of the initial value, said cycle until a situation of warning occurs.

4. Apparatus as claimed in claims 1, 2, 3 characterized in that the MP is programmed in such a way that is memorizes as initial value of reference the average of a predetermined numbers of counts of the time taken by the slope for reaching the value of the worked signal coming from the transducer. and that is from the emitting of the start signal to the receiving by MP of the output signal of the comparing section SCO.

5. Apparatus as claimed in claims 1,2,3,4 characterized in that the MP is equipped with a series SW of two or more microswitches and connected to the sames and programmed in such a way that with closing one or more of said switches, it is able to establish the sensitivity of the apparatus and that is the number of clock units, of which the count of the time of the cycle has to exceed that memorized as initial, so thatthe MP considers said cycle as a warning cycle and then it controls the warning device.

6. Apparatus as claimed in claims 1,2,3,4,5 characterized in that the MP is equipped with a series SW of such microswitches and connected in such a way to the sames and programmed in such a way that closing one or more of said switches it is able to define the number of consecutive counts of warning cycles, after which it controls the warning device.

7. Apparatus as claimed in any one of the previous claims characterized in that the motion module MAS comprehends a circuit of double supply SDA and that is with two values of voltage, equal and of opposite sign, and with the ground at the intermediate value in order to allow the module MAS to have the maximum sensitivity for changes of attitude of the vehicle in all directions.

8. Apparatus as claimed in any one of the previous claims characterized in that the MP is programmed in such a way that it is able to reset itself automatically for changes of temperatures or the likes, that is modifying the value of the count memorized as initial only for very little changes that is changes of one unit of clock from a count to the following one, that if for changes which can not correspond to changes of attitude of the vehicle.

9. Apparatus as claimed in claims 1 and 2, characterized in that the motion module MAS comprehends a container constituted by a hollow spherical member 4, with flat poles or not, composed by two caps 5,6 fixable each to other, by a base structure 7 of said spherical member and by a ring 8 for fixing in an adjustable way the spherical member 4 to said base 7, being the spherical member suitable to receive in its interior and to hold fixed to itself the base 1 of the electronic circuit, on which in addition to the printed circuit and to the components of the circuit is fixed also the electrolytic transducer 2, being the base structure 7 shaped in such a way to be fixable to the fixed structure of the vehicle, and to be equipped with bearing elements 17 for the spherical member according to a ring 16 with internal surface 17i sloping or spherical delimited by two circumferences with diameters less than the maximum one of the spherical member, and by elements 18 for collaboration, generally a threading, with the fixing ring 8, being this ring at its turn equipped with such corresponding elements 21 for collaboration with the spherical member and that is shaped in such a way to be suitable for being inserted on the spherical member after having leaned said member on the special elements 17 of the base, and joined to the base, and that is screwed to this base in the case of connection by threading, until the special elements 21 of ring 8 go in collaboration contact with the surface of the spherical member according to a ring 21 sloping or spherical internal surface 21i delimited by circumferences with diameters less than the maximum diameter of the spherical member and by the opposite part respect to said maximum diameter of contact surface 17i with special elements 17 of the base, so as to bind said spherical member 4 to base 7 and to fix it completely to said base, when the ring 8 is tightened or in any case blocked to the base, and on the contrary, before fixing it, to hold it only bound to itself allowing the rotation around any axis with light friction when the ring 8 is only partially screwed or in any case partially fixed to the base, in such a way that after the mounting consisting in fixing the base 7 to the fixed structure of the vehicle, inserting the spherical member in its base, after having mounted in its interior the electronic circuit with electrolytic transducer, and partially fixing of the ring 8 to the base for holding the spherical member, one can rotate said spherical member, - for placing base 1 of the electronic circuit in orizontal position in order to obtain that at the beginning the surface of the electrolyte is perpendicular to the electrodes and therefore the electrolytic transducer has the maximum capacity of detecting changes of attitude in any directions, - and for adjusting the direction of the base 1 of the transducer 2 and as consequence of its external electrodes E1,E2,E3,E4 respect to the transversal and longitudinal axis of the vehicle according to a wonted direction, in that the sensitivity of the transducer changes in relation to the direction according to which the transducer and therefore its external electrodes are fixed to the fixed strutture of the vehicle, and considering that the changes of attitude unlikely occur for rotation around an axis parallel only to the transversal axis or to the longitudinal axis of the vehicle but ever around an axis with an intermediate direction, one can with fixing the direction of the transducer, upon mounting it on the vehicle, determine the directions of maximum sensitivity of the module itself in relation to the type of the vehicle.

10. Apparatus as claimed in claim 9, characterized in that the upper 5 cap of the spherical member 4 is equipped with a hollow 30 suitable to receive and to fix a level 31, generally a water level, suitable to allow an easy and rapid direction adjustment of the spherical member 4 so as to place the base 1 of the electronic circuit and then the electrolytic transducer in orizontal position, being moreover the upper cap 5 equipped with signs 47,48,49 as grooves, reliefs or other means, of two arcs of the maximum circle perpendicular each to other and going through the center of level 31 and placed in predetermined way respect to the positions of the external electrodes, being said signs such to allow an easy and rapid direction adjustment of the spherical member 4 and as consequence of the base of the transducer and of the position of the external electrodes respect to the transversal and longitudinal axis of the vehicle according to a wonted direction in relation to those of maximum sensitivity of the module.

11. Apparatus as claimed in claims 5.,6.,9.,10. characterized in that microswitches 3 are mounted on the base 1 of the electronic circuit and the spherical member of the container of the motion module MAS is equipped with a hole 32 of shape, dimensions and position suitable to allow to reach the microswitches 3 of adjustment of the sensitivity of the module in order to permit to connect or disconnect them in any moment after mounting, direction adjusting and fixing of the module MAS to the fixed structure of the vehicle, being moreover the spherical member equipped with a plug 34 suitable to close said hole to make tight the spherical member for protecting its contents, and in any case for allowing its reopening and closing when necessary for a further adjustment of the microswitches 3.

FIG.1

FIG.2

FIG.3

FIG.4

FIG.5

FIG.7

FIG.6

FIG.8

FIG.9